# EUROPÄISCHE PATENTANMELDUNG

(11) **EP 4 524 068 A2**
(43) Veröffentlichungstag der Anmeldung: **19.03.2025**
(21) Anmeldenummer: 24215216.3
(22) Anmeldetag: 30.05.2022
(51) Int. Cl.: B65G 47/61

(54) **TRANSPORTTASCHE ZUM HÄNGENDEN TRANSPORT VON FÖRDERGUT SOWIE EINE ENTLADESTATION, SCHLIESSSTATION UND EINE FÖRDERANLAGE FÜR DIESE TRANSPORTTASCHEN**

(30) Priorität: 17.06.2021 DE 102021003096
(62) Teilanmeldung aus: 22730900.2
(71) Anmelder: SSI Schäfer Automation GmbH (AT), 8051 Graz (AT)
(72) Erfinder: Janzen, Paul, 33619 Bielefeld (DE)
(74) Vertreter: Witte, Weller & Partner Patentanwälte mbB

(57) **Zusammenfassung**

Eine Transporttasche (2) mit einer Verschlusseinrichtung (56) im unteren Bereich zum lösbaren verbinden der Vorderwand (4) mit der Rückwand (5) in den Verschlusszustand (21) zum Aufnehmen des Förderguts (39) und zum Lösen der Verbindung aus dem Verschlusszustand (21) im Geöffneten Zustand (22) zur Freigabe des Förderguts (39). Das Verriegeln der Verschlusseinrichtung (56) wird mithilfe eines elektrischen Antriebs (10) gemacht, welcher vorzugsweise einen kostengünstigen Hubmagneten mit Federrückstellung darstellt. Der Hubmagnet ist mit elektrischen Leitungen (15) mit den elektrischen Kontakten (14) verbunden, welche sich im oberen Bereich der Aufhängeeinrichtung (1) befinden. Die reversible Schließverriegelung (18) wird mithilfe der Feder des Hubmagnets erreicht. Für die Öffnung der Verschlusseinrichtung (56) wird der Hubmagnet für eine kurze Zeit geschaltet und die reversible Schließverriegelung (18) wird gelöst. Die Schaltung findet in der Entladestation (49) statt, dadurch dass elektrischer Strom an die elektrischen Kontakte (14) zugeführt wird mithilfe der elektrischen Schaltkontakte (31) der Entladestation (49). Weitere Vorteile bietet die unkomplizierte effiziente Schließstation (51) zum Verschließen der Transporttaschen (2) mithilfe einer Hebe-Rampe (38). Außerdem ist die Transporttasche (2) in Förderrichtung faltbar und bildet im unbeladenen Zustand eine minimale Tiefe, was zu einer effizienten Benutzung der Transportbahnen führt

## Beschreibung

Die Erfindung betrifft eine Transporttasche zum hängenden Transport von Fördergut nach dem Oberbegriff des Anspruchs 1. Ferner betrifft die Erfindung eine Entladestation und Schließstation für derartige Transporttaschen sowie eine Förderanlage mit einer derartigen Station.

Aus der EP 2 130 968 A1 ist eine Tragvorrichtung bekannt, aufweisend eine Tragwand mit einer starren Vorderwand sowie einer flexiblen Rückwand und eine Verschlusseinrichtung zur lösbaren Verbindung der Vorderwand mit der Rückwand. Zum Lösen der Verbindung zwischen der Vorderwand und der Rückwand weist die Tragvorrichtung eine Betätigungseinrichtung mit einem beabstandet zu der Verschlusseinrichtung angeordneten Betätigungsmittel und einem zwischen dem Betätigungsmittel und der Verschlusseinrichtung wirkenden Übertragungsmittel auf. Das Übertragungsmittel ist an einer Vorderseite der Vorderwand angeordnet und als starre Zugstange ausgebildet. Um die freigängige Verlagerung des Übertragungsmittels auch bei einer Beladung der Tragvorrichtung mit Waren zu gewährleisten ist die Vorderwand starr ausgebildet. Durch die starre Ausbildung der Vorderwand ist diese besonders schwer und die zum Transport der Waren zur Verfügung stehende maximale Traglast der Tragvorrichtung ist reduziert. Durch die eingeschränkte Flexibilität der Vorderwand ist eine Anpassung an die individuelle Geometrie der Waren zudem nicht möglich, wodurch diese nicht ausreichend fest umschlossen werden und aufgrund transportbedingter Vibrationen und Anfahrtsbeschleunigungen aus der Tragvorrichtung herausfallen können.

Aus der EP 3 231 741 A1 ist eine Tragvorrichtung zum Aufnehmen von Waren mit einer Tragwand und einer Verschlusseinrichtung bekannt. Die Tragwand umfasst eine Vorderwand und eine Rückwand und ist zwischen einem Verschlusszustand, in dem ein Tragvolumen zum Aufnehmen der Waren zumindest teilweise nach vorne, nach unten und nach hinten begrenzt ist, und einem Geöffneten Zustand, in dem das Tragvolumen nach unten freigegeben anzuordnen ist. Die Verschlusseinrichtung weist zwei Schließmittel zum reversiblen Verbinden der Vorderwand mit der Rückwand in dem Verschlusszustand auf. Die beiden Schließmittel sind an der Tragwand angebracht. Beim Freigeben der Waren aus der Tragvorrichtung können insbesondere Waren großer Abmessungen zwischen der Tragwand und einem der beiden Schließmittel verkanten. Hierdurch kann es zu Stillstandszeiten kommen und die Waren können entfernt von dem beabsichtigten Entladeort aus der Tragvorrichtung herausfallen und dabei verloren gehen oder beschädigt werden.

Aus der DE 202017105508U1 ist eine Transporttasche bekannt, umfassend eine Vorderwand, eine Rückwand und einen schwenkbaren Haltebügel, wobei die Vorderwand und die Rückwand jeweils an ihrem oberen Enden gelenkig mit dem Haltebügel verbunden sind und wobei am unteren Ende der Vorderwand wenigstens ein Kupplungselement angeordnet ist, dadurch gekennzeichnet, dass ein rinnen- oder wannenartiges Bodenelement (20; 120) mit einer ersten Seitenwand und einer zweiten Seitenwand vorgesehen ist, wobei die erste Seitenwand gelenkig mit der Rückwand verbunden ist und die zweite Seitenwand wenigstens ein Gegenkupplungselement aufweist, das mit wenigstens einem Kupplungselement wechselwirkt. Der Nachteil der Transporttasche ist das Beladen von der Seite.

Die bekannten Transporttaschen mit Mitteln zum Automatischen Entladen und Schließen und die Förderanlagen für die Transporttaschen sind aufwendig aufgebaut, erfordern komplizierte Schließstationen und Entladestationen, sind nicht effizient genug, teilweise lautstark, schwer und mit vielen zusätzlichen Sicherheitssystemen ausgestattet zum Vermeiden von Betriebsausfällen.

Der Erfindung liegt die Aufgabe zugrunde die gattungsgemäße Transporttasche zum hängenden Transport von Fördergut und die Förderanlage für die Transporttasche derart weiterzubilden, dass eine effiziente mit wenigen Teilen kompakt aufgebaute leichte und faltbare in Förderrichtung Transporttasche entsteht, die in Förderanlagen transportiert und unkompliziert ohne großen Aufwand bei dem Transport automatisch entladen und geschlossen werden kann und das bei normaler Geschwindigkeit des Sortiersystems der Förderanlage.

Diese Aufgabe wird erfindungsgemäß durch die Merkmale im Kennzeichnungsteil des Anspruchs 1 und der Unteransprüchen gelöst, dadurch dass die Transporttasche
eine Verschlusseinrichtung im unteren Bereich aufweist zum lösbaren Verbinden der Vorderwand mit der Rückwand in den Verschlusszustand zum Aufnehmen des Förderguts und zum Lösen der Verbindung zwischen der Vorderwand und der Rückwand aus dem Verschlusszustand im Geöffneten Zustand zur Freigabe des Förderguts nach unten. Das Verriegeln der Verschlusseinrichtung wird mithilfe eines elektrischen Antriebs, welcher vorzugsweise einen kostengünstigen Hubmagneten mit Federrückstellung und einem beweglichen stabförmigen Anker darstellt. Der Hubmagnet ist mit elektrischen Leitungen mit den elektrischen Kontakten verbunden, welche vorzugsweise Schleifkontakte darstellen, und sich im oberen Bereich der Aufhängeeinrichtung befinden. Die Verriegelung wird mithilfe der Feder des Hubmagnets erreicht. Für die Öffnung der Verschlusseinrichtung wird der Hubmagnet für eine kurze Zeit geschaltet, die Verriegelung wird gelöst und die Transporttasche wird entladen. Die Schaltung findet in der Entladestation statt, dadurch dass elektrischer Strom an die elektrischen Kontakte zugeführt wird mithilfe der elektrischen Schaltkontakte der Entladestation, welche in Kontakt Position zu den elektrischen Kontakten ausfahren und den Hubmagnet mit elektrischem Strom schalten, sodass die Verschlusseinrichtung öffnet. Weitere Vorteile bietet das unkomplizierte effizient Verschließender Transporttaschen mithilfe einer Hebe-Rampe. Außerdem ist die Transporttasche in Förderrichtung faltbar und bildet im unbeladenen Zustand eine Tiefe, welche die Tiefe der Transportkupplung im Wesentlichen nicht überschreitet und so zur effizienten Benutzung der Transportbahnen führt.

Weitere Merkmale, Vorteile und Einzelheiten der Erfindung ergeben sich aus der folgenden Beschreibung von Ausführungen und Beispielen anhand der Zeichnungen.

Es wird dargestellt:
Fig. 1 eine Seitenansicht der Transporttasche im geöffneten Zustand,
Fig. 2 eine perspektivische Vorderansicht der Transporttasche im geöffneten Zustand,
Fig. 3 eine perspektivische Vorderansicht der Schaltmittel und Mittel für die Steuerung,
Fig. 4 eine Vorderansicht der Transportkupplung mit den elektrischen Schaltkontakten,
Fig. 5 eine Draufsicht der Schaltmittel,
Fig. 6 eine Seitenansicht der Transporttasche im Verschlusszustand,
Fig. 7 eine perspektivische Hinteransicht der Transporttasche im Verschlusszustand,
Fig. 8 eine Seitenansicht im Schnitt der Schaltmittel,
Fig. 9 eine perspektivische Draufsicht des Vorder-Rahmens,
Fig. 10 eine perspektivische Draufsicht des Hinter-Rahmens,
Fig. 11 eine Vorderansicht im Schnitt der Förderanlage und der Entladestation,
Fig. 12 eine perspektivische Hinteransicht der Förderanlage und der Entladestation,
Fig. 13 eine perspektivische Hinteransicht der Förderanlage und der Schließstation,
Fig. 14 eine Seitenansicht der Schließstation,
Fig. 15 eine Vorderansicht der Förderanlage und der Schließstation,
Fig. 16 eine perspektivische Hinteransicht der Transporttasche im Verschlusszustand,
Fig. 17 eine perspektivische Hinteransicht der Transporttasche im Geöffneten Zustand in der Entladestation,
Fig. 18 eine perspektivische Seitenansicht eines Fragments der Linearen Schließelemente,
Fig. 19 eine perspektivische Seitenansicht der Linearen Schließelemente,
Fig. 20 eine Vorderansicht der Linearen Schließelemente,
Fig. 21 eine Seitenansicht der Linearen Schließelemente,
Fig. 22 eine perspektivische Hinteransicht der Förderanlage und der Schließstation,
Fig. 23 eine Seitenansicht der Schließstation,
Fig. 24 eine Vorderansicht der Förderanlage und der Schließstation,
Fig. 25 eine perspektivische Vorderansicht der Beladestation,
Fig. 26 eine Seitenansicht der leeren Transporttaschen in der Förderanlage auf einer Staustrecke mit einem Anhalter,
Fig. 27 eine perspektivische Hinteransicht der leeren Transporttaschen in der Förderanlage auf einer Staustrecke mit einem Anhalter.

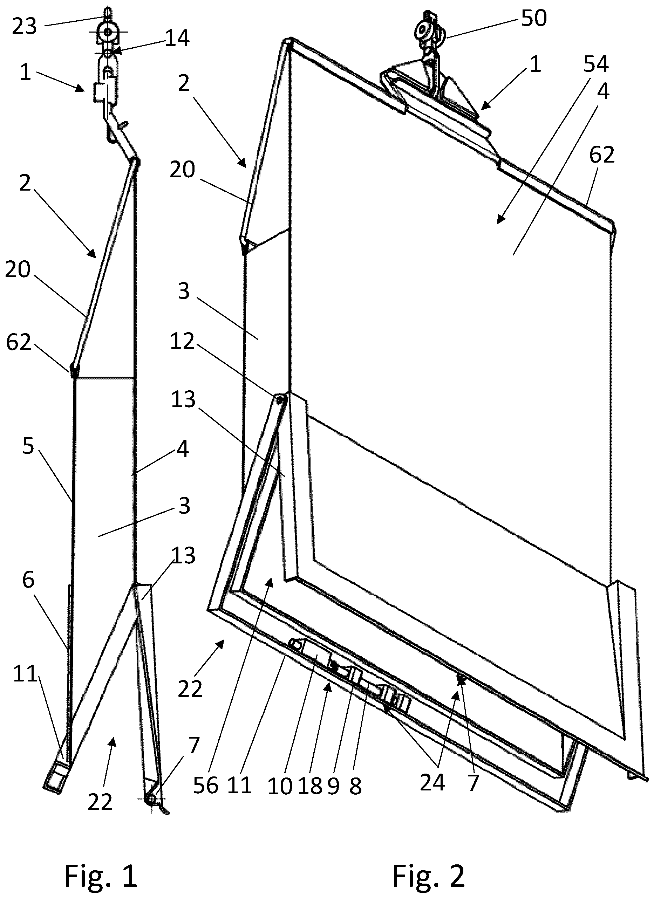

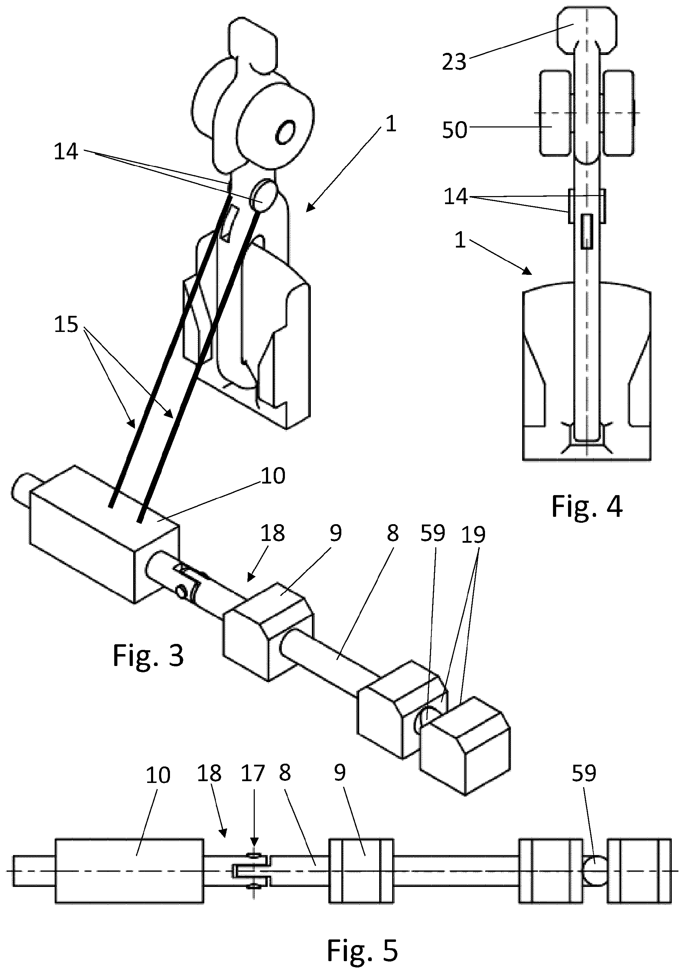

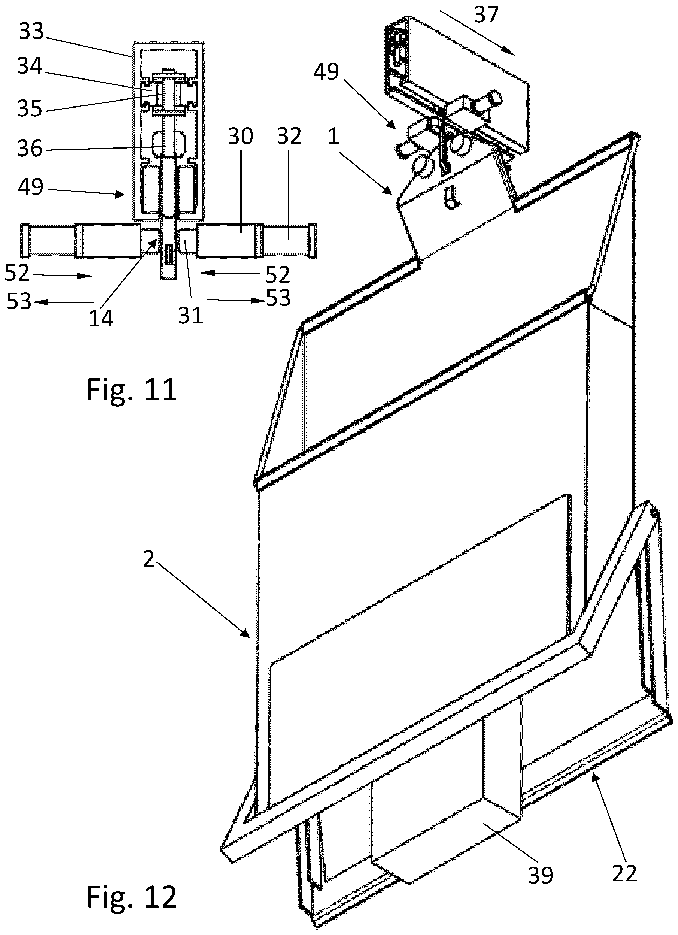

In Fig. 1 bis 5 ist eine Transporttasche 2 im Geöffneten Zustand 22 abgebildet, bestehend aus einer Aufhängeeinrichtung 1 mit Rollen 50 und einer Kupplung 23 zur Übertragung gemäß Fig. 11 der Antriebskraft des Förderelements 35. Im Übrigen wird auf die DE102021002833A1 verwiesen, aus der die Aufhängeeinrichtung 1 vorbekannt ist. Auf den Rollen 50 sind die Transporttaschen 2 in einer Transportschiene 33 verschiebbar gelagert. Im unteren Bereich der Aufhängeeinrichtung 1 ist der Beladerahmen 20 eingebaut. Der Beladerahmen 20 ist rechteckig ausgebildet und besteht vorzugsweise aus einem Metalldraht. Auf dem Beladerahmen 20 ist die in Förderrichtung 37 faltbare Tragwand 54 mithilfe von Säumen befestigt und gesichert mit den Schutzleisten 62. Die Tragwand 54 besteht aus einer Vorderwand 4, einer Rückwand 5 und Seitenwänden 3 und ist zumindest teilweise aus flexiblem Stoff gebildet. Der Stoff ist vorzugsweise schwer entflammbar ausgebildet und insbesondere halogenfrei. Im unteren Bereich der Transporttasche 2 befindet sich die Verschlusseinrichtung 56 zum lösbaren Verbinden der Vorderwand 4 mit der Rückwand 5 in den Verschlusszustand 21 zum Aufnehmen des Förderguts 39 und zum Lösen der Verbindung zwischen der Vorderwand 4 und der Rückwand 5 aus dem Verschlusszustand 21 im Geöffneten Zustand 22 zur Freigabe des Förderguts 39 nach unten. Die Verschlusseinrichtung 56 beinhaltet einen Vorder-Rahmen 13 und einen Hinter- Rahmen 11 die schwenkbar, mit Scharnieren 12 miteinander verbundenen sind und zusammenklappbar sind zum reversiblen Erzeugen eines Versschlusszustands 21 oder Geöffneten Zustand 22 der Transporttasche 2. Der Vorder-Rahmen 13 ist an der Vorderwand 4 angebracht. Der Hinter-Rahmen 11 ist mit dem unteren Bereich 57 an der Rückwand 5 und mit den seitlichen Bereichen 29 an die Seitenwänden 3 angebracht. Die Rückwand 5 beinhaltet im unteren Außenbereich eine Stabilisierungsplatte 6 zum Verhindern des Verkantens des eingeladenes Förderguts 39. Die Schließmittel 24 zum reversiblen Verbinden und Öffnen der Verschlusseinrichtung 56 befinden sich im unteren Bereich der Verschlusseinrichtung 56 und bestehen aus einem Halteelement 7 mit einer Öse 45 in runder Form auf dem Vorder-Rahmen 13 und auf dem Hinter-Rahmen 11 aus einer reversiblen Schließverriegelung 18 bestehend aus einen elektrischen Antrieb 10, welcher ein linear bewegliches Riegelelement 8 antreibt mit einer abgeschrägten Spitze 59.

Das stabförmige Riegelelement 8 ist verbunden mit einem Scharnier 17 mit dem elektrischen Antrieb 10 und in den Linearführungen 9 gelagert, welche vorzugsweise Linearkugellager darstellen. Der elektrische Antrieb 10 wird mit einer elektrischen Leitung 15 mit den elektrischen Kontakten14 verbunden. Die elektrischen Kontakte 14 sind auf der Aufhängeeinrichtung 1 rechts und links spiegelbildlich in Förderrichtung platziert. Der elektrische Antrieb 10 ist vorzugsweise ein kostengünstiger Hubmagnet mit einer Federrückstellung und einem beweglichen stabförmigen Anker. Die Schließung der reversiblen Verriegelung 18 wird mithilfe der Feder des elektrische Antrieb 10 erreicht, dadurch das das Riegelelement 8 in die Öse 45 des Halteelements 7 reinfährt, welches in diesem Moment zwischen den Führungen 19 eigeschlossen ist. Für die Öffnung wird der elektrische Antrieb 10 für eine kurze Zeit geschaltet, das Riegelelement 8 entfernt sich aus dem Halteelement 7 und die reversible Schließverriegelung 18 wird gelöst, die Verschlusseinrichtung 56 öffnet sich.

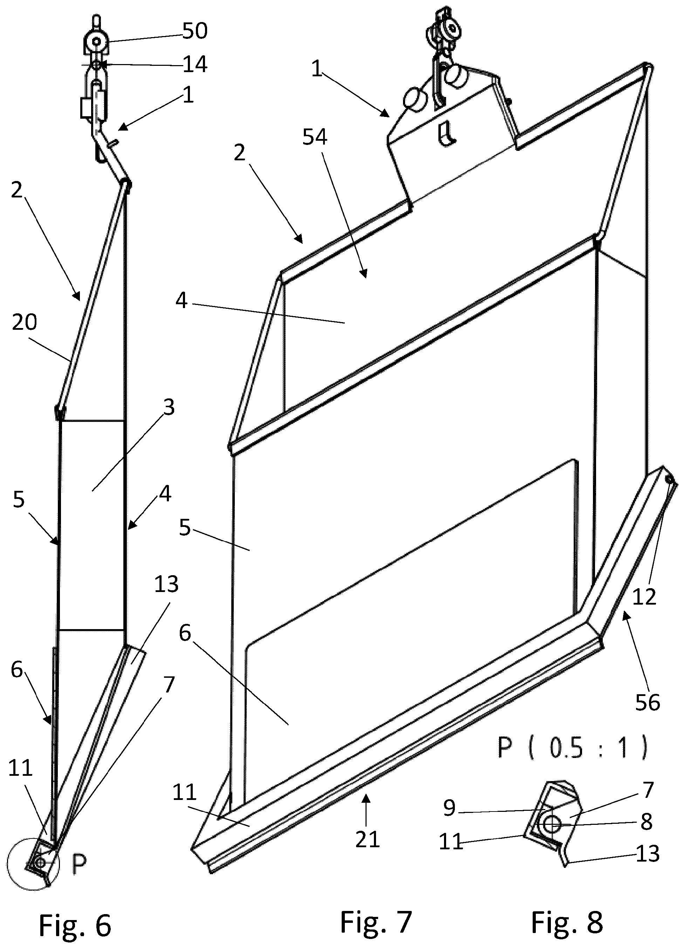

Gemäß Fig. 6 bis 8 ist die Transporttasche 2 im Verschlusszustand 21 dargestellt. Der Vorder-Rahmen 13 und der Hinter-Rahmen11 sind zusammengeklappt. Das Riegelelement 8 ist in die Öse 45 des Halteelements 7 reingefahren, welches in diesem Moment zwischen den Führungen 19 eigeschlossen ist. Die Transporttasche 2 befindet sich im Verschlusszustand 21 und ist bereit zur Aufnahme von Fördergut 39.

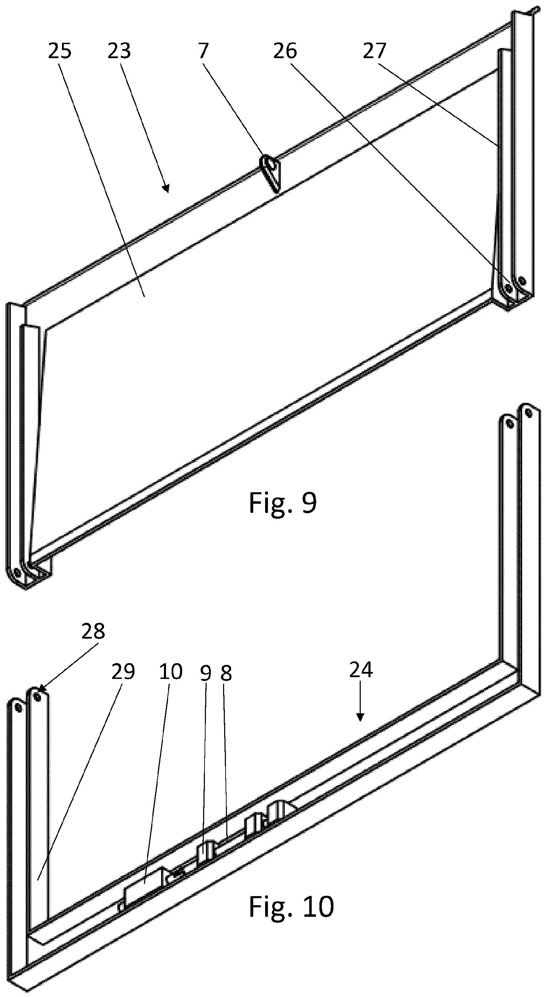

Der Vorder-Rahmen 13 bildet gemäß Fig 9 einen Grundköper 25 mit beidseitigen in U-Profil Form Scharnier Elementen 27 mit Scharnierlagern 26 für die Scharnierwelle. Im unteren Bereich des Vorder-Rahmen 13 befindet sich die Halterung 7 mit der Öse 45. Der Hinter-Rahmen 11 bildet gemäß Fig. 10 einen U-förmigen Rahmen aus einem U-Profil mit beidseitigen Scharnier Elementen mit Scharnierlagern 28 für die Scharnierwelle. Im unteren Bereich des Hinter-Rahmens 11 befindet sich die reversible Schließverriegelung 18.

Gemäß Fig. 11 und 12 wird die Entladestation 49 für die Transporttaschen 2 mit einer Verschlusseinrichtung 56, welche einen Vorder-Rahmen 13 und einen Hinter-Rahmen 11 aufweist, schwenkbar mit den Scharnieren 12 miteinander verbunden sind und zueinander zusammenklappbar sind darstellt. Die Entladestation 49 dient zum Ausladen des Förderguts 39 auf die Entladeplätze zum Aufnehmen des ausgeladenen Förderguts 39. Die Entladestation 49 ist an der Förderanlage befestigt, welche vorzugsweise die Sortieranlage für die Transporttaschen 2 darstellt. Die Förderanlage weist vorzugsweise eine aus Aluminium gefertigte Tranportschiene 33 mit einem kastenförmigen und symmetrisch ausgebildeten Querschnitt mit Förderelement-Führungen 34 auf, mit den oberen begrenz Stegen für die Rollen 50 und den Laufstegen für die Rollen 50. Das Förderelement 35 ist mittels eines nicht dargestellten Elektromotors umlaufend Antreibbar. Der Elektromotor weist vorzugsweiseeine eine Beschleunigungsrampe und Bremsrampe auf zur Verringerung der axialen Verschiebungen und die dadurch entstehenden Kräfte. Das Förderelement 35, ist vorzugsweise eine kostengünstige handelsübliche Rollenkette mit schwenkbaren Gelenken. An der Unterseite beinhaltet das Förderelement 35 die Mittnehmer 36.

Unterhalb des Förderelements 35 befinden sich in der Transportschiene 33 die angetriebenen Transportaschen 2. Die Entladestation 49 ist an der Transportschiene 33 befestigt und beinhaltet schaltbar mit mindesten einem Antrieb 32 in Richtungen 52, 53 in einem Körper 30 gelagerte elektrische Schaltkontakte 31, welche vorzugsweise gefederte Kohlebürstenkontakte darstellen, mit einem entsprechenden Anschluss an das elektrische Stromnetz. Für die Öffnung der Verschlusseinrichtung 56 zum Entladen der Transporttasche 2 wird der elektrische Antrieb 10 für eine kurze Zeit geschaltet, die reversible Schließverriegelung 18 wird gelöst, die Verschlusseinrichtung 56 öffnet sich und das Fördergut 39 wird aus der Transporttasche 2 entladen. Die Schaltung findet in der Entladestationen 49 statt, dadurch dass elektrischer Strom an die elektrische Kontakte 14 zugeführt wird mithilfe der elektrischen Schaltkontakte 31 der Entladestation 49, welche im Moment des Erreichens der Kontakte, zu den elektrischen Kontakten 14 in Richtung 52 mithilfe der Antriebe 32 rausfahren bis zum Kontakt zu den elektrischen Kontakten 14 zum Herstellen einer elektrischen Verbindung mit den elektrischen Kontakten 14 und Schalten mit elektrischen Strom des elektrischen Antriebs 10, sodass die Verschlusseinrichtung 56 öffnet und die Transporttasche 2 entladen wird. Das Entladen kann in beliebiger Förderrichtung stattfinden, beim Schleifen der elektrischen Kontakten 14 an den geschalteten elektrischen Schaltkontakte 31, sowie auch mit angehaltenen Transporttaschen 2.

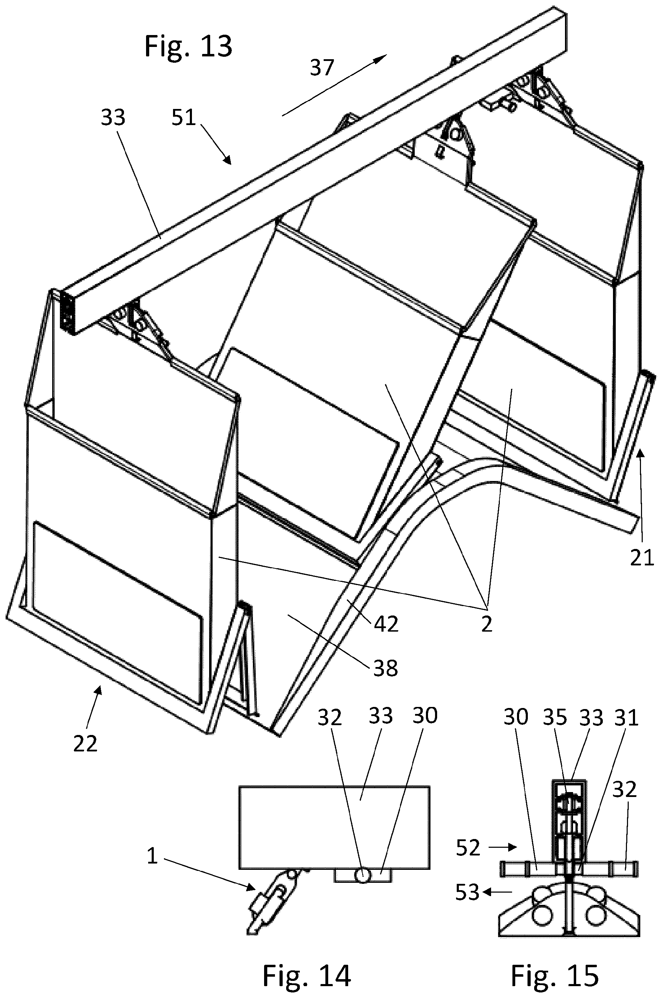

Die Fig. 13 bis 15 zeigen die Schließstation 51 für die Transporttaschen 2 mit einer Verschlusseinrichtung 56, welche einen Vorder-Rahmen 13 und einen Hinter-Rahmen 11 beinhaltet, zum lösbaren Verbinden der Vorderwand 4 mit der Rückwand 5 in den Verschlusszustand 21 zum Aufnehmen des Förderguts 39. Die Mittel zum Verriegeln der Verschlusseinrichtung 56 beinhalten eine Hebe-Rampe 38 mit seitlichen Führungsstegen 42 zum Hochschwenken und Ausrichten der offenen Transporttasche 2. Die offene Transporttasche 2 wird geführt und zentriert verlagert in Richtung 37 auf dem Steigungsbereich der Hebe Rampe 38 mit der Förderanlage. Die Förderanlage weist eine Tranportschiene 33 auf mit einem kastenförmigen und symmetrisch ausgebildeten Querschnitt mit Förderelement-Führungen 34, mit den oberen begrenz Stegen für die Rollen 50 und den Laufstegen für die Rollen 50. Das Förderelement 35 ist mittels eines nicht dargestellten Elektromotors umlaufend Antreibbar. An der Unterseite beinhaltet das Förderelement 35 Mittnehmer 36. Unterhalb des Förderelements 35 befinden sich in der Transportschiene 33 die angetriebenen Transportaschen 2. Im oberen Bereich der Hebe-Rampe 38 klappt die Verschlusseinrichtung 56 durch die schräge Stellung der Transportasche 2 unter Eigengewicht zusammen, sodass die Verschlusseinrichtung 56 zum Verriegeln vorbereitet ist. Gleichzeitig beim Erreichen der elektrischen Kontakte 14, der Kontakt Position mit den elektrischen Schaltkontakten 31, werden die elektrischen Schaltkontakte 31 mit dem Antrieb 32 aktiviert und fahren raus in Richtung 52 zum Herstellen einer elektrischen Verbindung mit den elektrischen Kontakten 14 und Schalten mit einem elektrischen Strom des elektrischen Antriebs 10. Die reversible Schließverriegelung 18 der Schließmittel 24 öffnet, sodass das Halteelement 7 ohne Widerstand zwischen den Führungen 19 reinfährt. Nach dem Ausschalten des elektrischen Antriebs 10 schließt, die reversible Schließverriegelung 18 das Halteelement 7 mithilfe der Feder und erzeugt den Verschlusszustand 21.

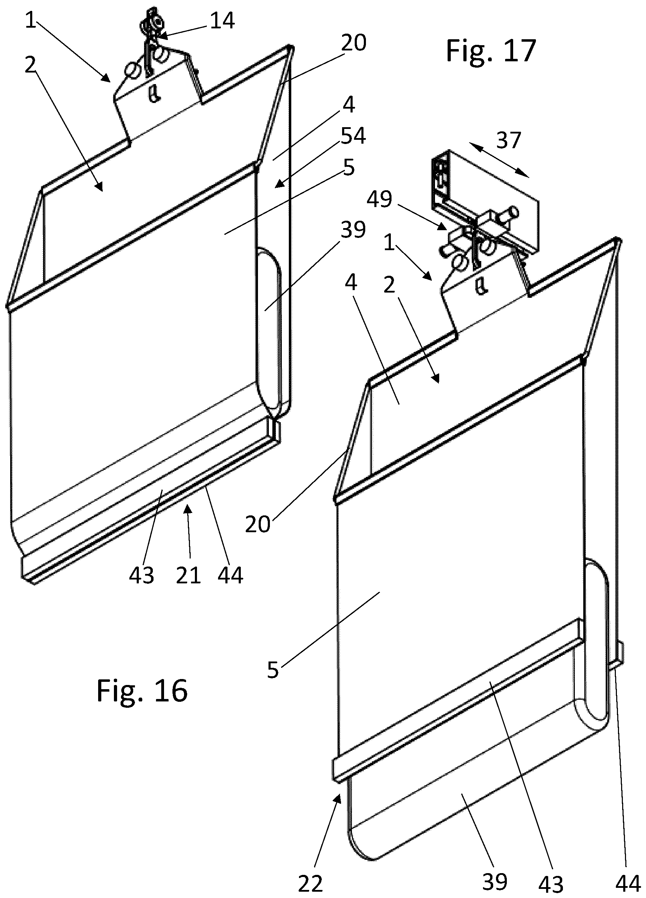

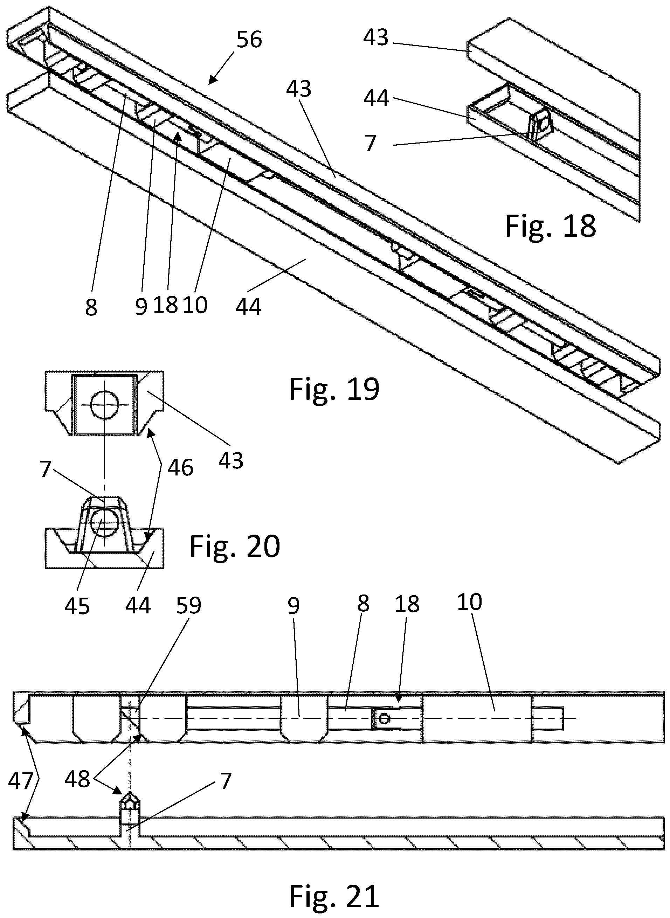

Gemäß Fig. 16 bis 21 wird eine Transporttasche 2 dargestellt mit einer Verschlusseinrichtung 56 welche ein Lineares Vorder-Schließelement 44 und ein Lineares Rück-Schließelement 43 aufweist. Das Lineare Vorder-Schließelement 44 ist am unteren Bereich der Vorderwand 4 befestigt und das Lineare Rück-Schließelement 43 ist gegen gerichtet im unteren Bereich der Rückwand 5 befestigt. Das Lineare Vorder-Schließelement 44 und das Lineare Rück-Schließelement 43 beinhalten Zentriermittel 46, 47, 48 zum geführten Verlagern der Linearen Schließelemente 44, 43 relativ zueinander in den Verschlusszustand 21. Es ist mindestens ein Schließmittel 24 vorgesehen, vorzugsweise zwei. Die Schließmittel 24 weisen auf dem Linearen Vorder-Schließelement 44 der Verschlusseinrichtung 56 ein Halteelement 7 auf und auf dem Linearen Rück-Schließelement 43 der Verschlusseinrichtung 56 die reversible Schließverriegelung 18 und sind gleich aufgebaut wie in der Beschreibung oben gemäß Fig. 1 bis 5 offenbart ist.

Fig. 17 zeigt eine Entladestation 49 mit der Transporttasche 2 mit einer Verschlusseinrichtung 56 welche ein Lineares Vorder-Schließelement 44 und ein Lineares Rück-Schließelement 43 beinhaltet. Die Entladestation 49 hat den gleichen Aufbau und Eigenschaften wie in der Beschreibung oben gemäß Fig. 11 und 12 offenbart ist.

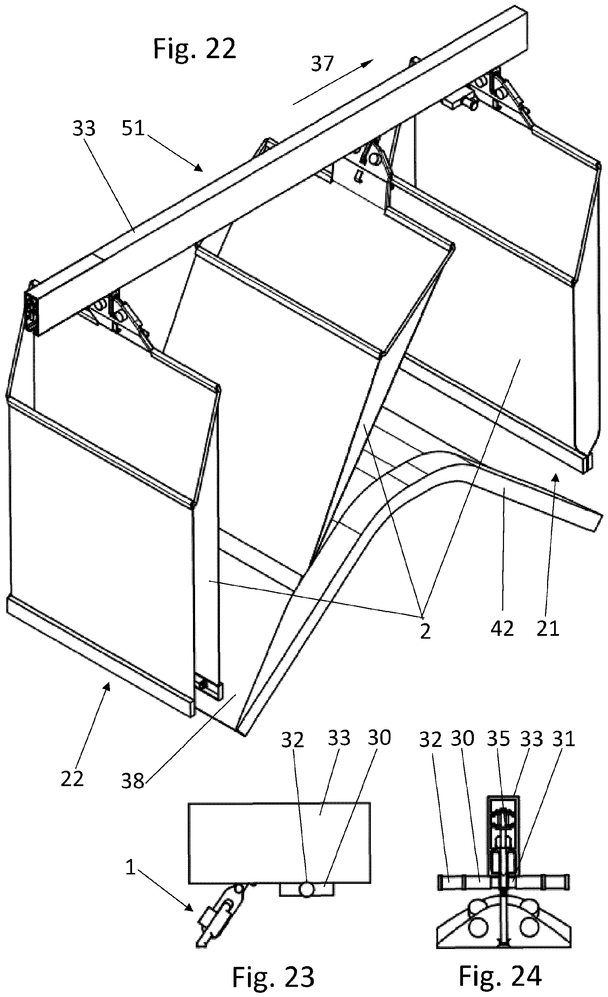

Die Fig. 22 bis 24 zeigen die Schließstation 51 für die Transporttaschen 2 mit einer Verschlusseinrichtung 56 mit Linearen Schließelementen 44, 43.

Die Mittel zum Verriegeln der Verschlusseinrichtung 56 beinhalten eine Hebe-Rampe 38 mit seitlichen Führungsstegen 42 zum Hochschwenken und Ausrichten der offenen Transporttasche 2, um die in den Verschlusszustand 21 zu bringen, dadurch dass die offene Transporttasche 2 geführt und zentriert mit den seitlichen Führungsstegen 42 verlagert wird mit der Förderanlage in Richtung 37 auf dem Steigungsbereich der Hebe Rampe 38. Im oberen Bereich der Hebe-Rampe 38 faltet sich die Transporttasche 2 durch die schräge Stellung unter Eigengewicht und die Verschlusseinrichtung 56 mit den Linearen Schließelementen 44, 43 mit den Zentriermittel 46, 47, 48 zum geführten Verlagern der Linearen Schließelemente 44, 43 relativ zueinander wird zum Verriegeln vorbereitet. Gleichzeitig beim Erreichen der elektrischen Kontakten 14 der Kontakt Position mit den elektrischen Schaltontakten 31, werden die elektrischen Kontakte 31 mit dem Antrieb 32 aktiviert und fahren raus in Richtung 52 zum Herstellen einer elektrischen Verbindung mit den elektrischen Kontakten 14 und Schalten mit einem elektrischen Strom des elektrischen Antriebs 10. Die reversible Schließverriegelungen 18 der Schließmittel 24 öffnet, sodass die Halteelemente 7 zwischen den Führungen 19 ohne Widerstand reinfahren und die Verschlusseinrichtung 56 nach dem Ausschalten der elektrischen Antriebe 10 mithilfe der Federn in den Verschlusszustand 21 versetzt wird.

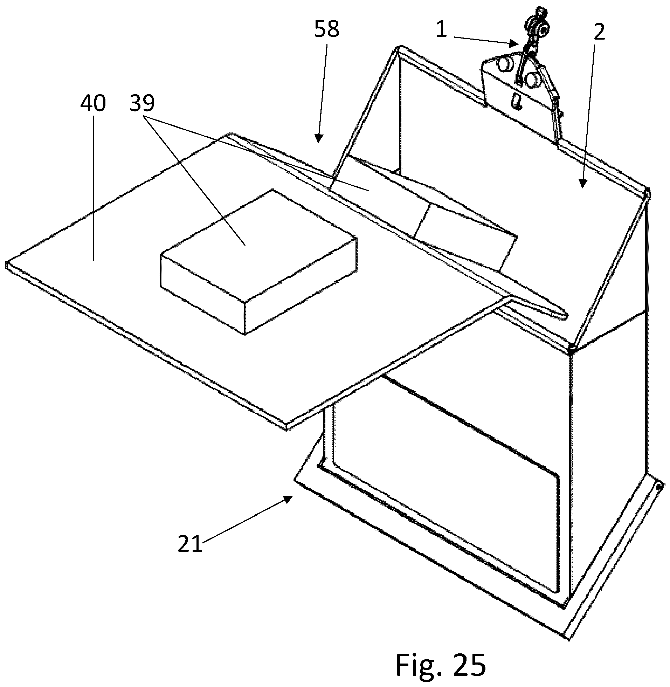

Gemäß Fig. 25 ist die Beladestation 58 abgebildet. Die Beladestation 58 dient zum Aufstellen und Positionieren der Transporttaschen 2 am Beladetisch 40. Das wird erreicht mittels einer nicht dargestellten Förderanlage. Nach dem Aufstellen und Positionieren am Beladetisch 40 wird das Fördergut 39 in die Transportasche 2 manuell oder mit einem Transportband eingeladen. Anschließend wird die beladene Transporttasche 2 vorzugsweise in die Sortieranlage gefördert zum Verteilen des Förderguts 39 auf den Entladestationen 49.

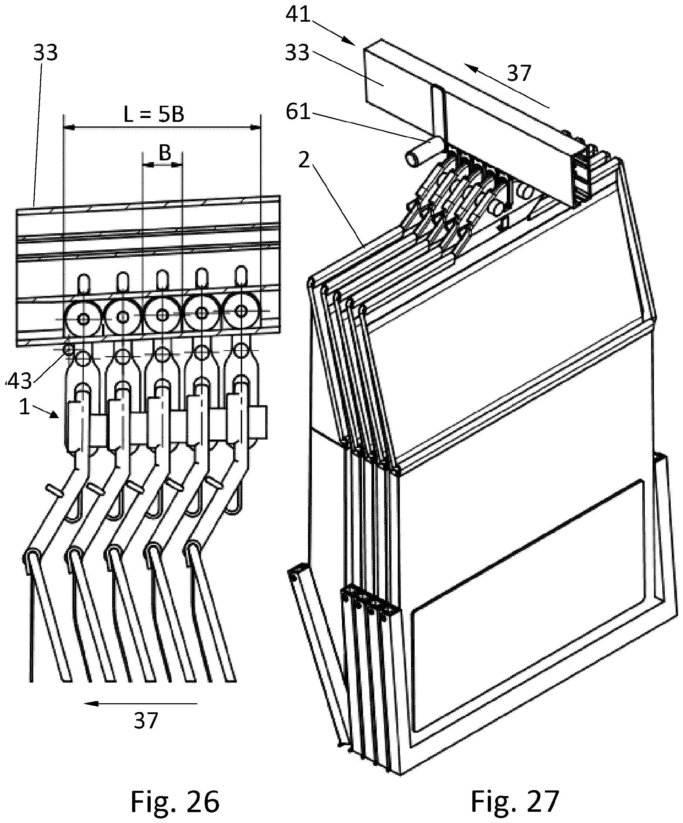

Gemäß Fig. 26 und 27 ist eine Staustrecke 41 mit leeren Transporttaschen 2 gezeigt. Die Transporttaschen 2 werden mit einer Vereinzelung oder Stoppvorrichtungen 61 angehalten und fahren im Gefälle zusammen, wobei sie sich in Förderrichtung 37 falten und so die maximale Dichte zueinander Erzeugen mit einer Gesamttiefe L. Die Aufhängeeinrichtung 1 hat ein maximales Maß B und bildet im Wesentlichem die maximale Tiefe einer leeren gefalteten in Förderrichtung 37 Transporttasche 2, vorzugsweise ist es größer, sodass beim Aufstauen der leeren Transportaschen 2 die Gesamttiefe aller Transporttaschen 2 ein Maß von L = B x Zahl der Transportaschen 2 nicht überschreitet.

Die vorliegende Anmeldung umfasst ferner die nachfolgenden Aspekte:
Klausel 1. Transporttasche (2) für eine Förderanlage zur Aufnahme von Fördergut (39)
   - mit einer Tragwand (54) welche eine Vorderwand (4) und eine Rückwand (5) aufweist,
   - einen mit der Tragwand (54) verbundenem Beladerahmen (20), der die obere Beschickungsöffnung der Tragwand (54) darstellt zum beabstandeten Anordnen der Vorderwand (4) von der Rückwand (5),
   - mit einer Aufhängeeinrichtung (1),
   - mit einer Verschlusseinrichtung (56) zum lösbaren Verbinden der Vorderwand (4), mit der Rückwand (5) in den Verschlusszustand (21), zum Aufnehmen des Förderguts (39) und zum Lösen der Verbindung zwischen der Vorderwand /4) und der Rückwand (5) aus dem Verschlusszustand (21) in den Geöffneten Zustand (22), zur Freigabe des Förderguts (39) nach unten,
   - mit mindestens einem Schließmittel (24) zum reversiblen Verbinden und öffnen
   der Verschlusseinrichtung (56),
   **dadurch gekennzeichnet,** dass das Schließmittel (24) mit einem elektrischen Antrieb (10) betätigt wird und dass Mittel für die Steuerung des elektrischen Antriebs (10) vorgesehen sind.
Klausel 2. Transporttasche (2) nach Klausel 1, **dadurch gekennzeichnet,** dass der elektrische Antrieb (10) ein elektrisch steuerbarer Magnet ist, vorzugsweise ein elektrischer Zugmagnet mit Federrückstellung und einem beweglichen stabförmigen Anker, und dass die Mittel für die Steuerung des elektrischen Antriebes (10) elektrische Kontakte (14) darstellen, angebracht an der Transporttasche (2) vorzugsweise an der Aufhängeeinrichtung (1) der Transporttasche (2) und mit einer elektrischen Leitung (15) mit dem elektrischen Antrieb (10) verbunden sind zur Herstellung einer elektrischen Verbindung mit dem elektrischen Antrieb (10).
Klausel 3. Transporttasche (2) nach einer der Klauseln 1 bis 2 **dadurch gekennzeichnet,** dass die Verschlusseinrichtung (56) einen Vorder-Rahmen (13) und einen Hinter-Rahmen (11) darstellt die schwenkbar, vorzugsweise mit Scharnieren (12) miteinander verbundenen sind und zueinander zusammenklappbar sind zum reversiblen Erzeugen eines Verschlusszustands (21) oder eines Geöffnetes Zustands (22) der Transporttasche (2) und dass der Vorder-Rahmen (13) an der Vorderwand (4) angebracht ist und der Hinter-Rahmen (11) an der Rückwand (5) angebracht ist.
Klausel 4. Transporttasche (2) nach einer der Klauseln 1 bis 3 **dadurch gekennzeichnet,**
   dass die Tragwand (54) zumindest teilweise aus einem flexiblen Stoff gebildet ist, vorzugsweise vollständig aus einem flexiblen Stoff besteht, besonders bevorzugt aus Textilen Stoff besteht und
   dass die Tragwand (54) Seitenwände (3) aufweist und
   dass der Hinter-Rahmen (11) mit den seitlichen Bereichen (29) an die Seitenwänden (3) angebracht ist zum Sichern des Förderguts (39) vor dem Herausfallen und
   dass die Schließmittel (24) sich im unteren Bereich 57) der Verschlusseinrichtung (56) befinden.
Klausel 5. Transporttasche nach einer der Klauseln 1 bis 4 **dadurch gekennzeichnet,** dass das Schließmittel (24) eine reversible Schließverriegelung (18) auf dem Hinter-Rahmen (11) der Verschlusseinrichtung (56) aufweist und
   dass die reversible Schließverriegelung (18) ein linear bewegliches Stabförmiges Riegelelement (8) aufweist, verbunden mit dem elektrischen Antrieb (10) und gelagert in den Linearführungen (9) und
   dass das Schließen der reversiblen Schließverriegelung (18) durch die Rückstell-Feder des elektrischen Antriebs (10) betätigt wird und das Öffnen durch die Schaltung des elektrischen Antriebs (10).
Klausel 6. Transporttasche (2) nach einer der Klauseln 1 bis 5 **dadurch gekennzeichnet,** dass das Schließmittel (24) auf dem Vorder-Rahmen (13) der Verschlusseinrichtung (56) ein Halteelement (7) mit einer Öse (45) aufweist und
   dass beim Zusammenklappen der Verschlusseinrichtung (56) das Halteelement (7) so positioniert ist, dass das Riegelelement (8) in die Öse (45) des Halteelements (7) reinfahren kann zum Schließen der Verschlusseinrichtung (56).
Klausel 7. Transporttasche (2) nach einer der Klauseln 1 bis 2 **dadurch gekennzeichnet,**
   dass die Verschlusseinrichtung (56) ein Lineares Vorder-Schließelement (44) und ein Lineares Rück-Schließelement (43) darstellt und
   dass das Lineare Vorder-Schließelement (44) am unteren Bereich der Vorderwand (4) befestigt ist und das Lineare Rück-Schließelement (43 gegengerichtet im unteren Bereich der Rückwand (5) befestigt ist und
   dass Zentriermittel (46;47;48) zum geführten zentrierten Verlagern der Schließelemente (43;44) relativ zueinander in den Verschlusszustand (21) vorgesehen sind und
   dass mindestens ein Schließmittel (24) vorgesehen ist und
   dass das Schließmittel (24) eine reversible Schließverriegelung (18) auf dem Linearem Rück-Schließelement (43) der Verschlusseinrichtung (56) aufweist und
   dass die reversible Schließverriegelung (18) ein linear bewegliches Stabförmiges Riegelelement (8) aufweist, verbunden mit dem elektrischen Antrieb (10) und gelagert in den Linearführungen (9) und
   dass das Schließen der reversiblen Schließverriegelung (18) durch die Rückstell-Feder des elektrischen Antriebs (10) betätigt wird und das Öffnen durch die Schaltung des elektrischen Antriebs (10) und
   dass das Schließmittel (24) auf dem Linearen Vorder-Schließelement (44) der Verschlusseinrichtung (56) ein Halteelement (7) mit einer Öse (45) aufweist und
   dass beim zum geführten zentrierten Verlagern der Schließelemente (43;44) relativ zueinander das Halteelement (7) so positioniert ist, dass das Riegelelement (8) mit in die Öse (45) des Halteelements (7) reinfahren kann zum Schließen der Verschlusseinrichtung (56).
Klausel 8. Förderanlage mit Transporttaschen (2) nach einer der Klauseln 1 bis 7
   - mit einer Transportschiene (33),
   - mit einer in der Transportschiene (33) in einer Förderrichtung (37) bewegbar gelagerten Förderelement (35) mit Mitnehmern (36),
   - mit in der Transportschiene (33) unterhalb des Förderelements (35) gelagerten Transporttaschen (2),
   - mit einer Entladestation (49) für die Transporttaschen (2) mit Mittel zum Öffnen der Verschlusseinrichtung (56) der Transporttasche (2) zum Ausladen des Förderguts (39) auf die Entladeplätze,
   - mit einer Schließstation (51) für die Transporttaschen (2) mit Mittel zum Verriegeln der Verschlusseinrichtung (56) der Transporttasche (2),
   - mit einer Beladestation (58) für die Transporttaschen (2) mit einem Beladetisch (40) zum manuellen, vorzugsweise zum automatischen mit einem Transportband Transport des Förderguts (39) in die Transporttasche (2),
   - mit Staustrecken (41) mit Vereinzelungen und Stoppvorrichtungen (61)
Klausel 9. Entladestation (49) für die Transporttaschen (2) nach einer der Klauseln 1 bis 8 **dadurch gekennzeichnet,**
   dass die Mittel zum Öffnen der Verschlusseinrichtung (56) mit elektrischem Strom versorgte elektrische Schaltkontakte (31) darstellen, welche vorzugsweise Kohlebürstenkontakte sind, und
   dass die elektrische Schaltkontakte (31) beim Schalten ein Kontakt mit den elektrischen Kontakten (14) erzeugen und eine elektrische Verbindung mit dem elektrischen Antrieb (10) herstellen zum Schalten des elektrischen Antriebs (10) sodass die Verschlusseinrichtung (56) sich öffnet und das Fördergut (39) wird ausgeladen.
   Klausel 10. Schließstation (51) für die Transporttaschen (2) nach einer der Klauseln 1 bis 9 **dadurch gekennzeichnet,**
   dass die Mittel zum Verriegeln der Verschlusseinrichtung (56) eine Hebe-Rampe (38) aufweisen zum Hochschwenken der Transporttasche (2) beim Fördern in Richtung (37) im Steigungsbereich der Hebe-Rampe (38) sodass durch die Schrägstellung der Transporttasche (2) ein zentriertes zusammenführen der Verschlusseinrichtung (56) in den Verschlusszustand (21) entsteht und
   dass gleichzeitig die elektrische Schaltkontakte (31) aktiviert werden zur Herstellung einer elektrischen Verbindung mit dem elektrischen Antrieb (10) mithilfe der elektrischen Kontakte (14) und Öffnen der reversiblen Schließverriegelung (18) der Schließmittel (24), sodass die Verschlusseinrichtung (56) zum Verriegeln bereitgestellt wird und nach dem Deaktivieren des Antriebs (10) der Verschlusszustand (21) mithilfe der Rückstell-Feder erzeugt wird.

## Patentansprüche

1. Transporttasche (2) für eine Förderanlage zur Aufnahme von Fördergut (39)
- mit einer Tragwand (54), welche eine Vorderwand (4) und eine Rückwand (5) aufweist,
- einen mit der Tragwand (54) verbundenem Beladerahmen (20), der eine obere Beschickungsöffnung der Tragwand (54) darstellt zum beabstandeten Anordnen der Vorderwand (4) von der Rückwand (5),
- mit einer Aufhängeeinrichtung (1),
- mit einer Verschlusseinrichtung (56) zum lösbaren Verbinden der Vorderwand (4) mit der Rückwand (5) in einen Verschlusszustand (21) zum Aufnehmen des Förderguts (39) und zum Lösen einer Verbindung zwischen der Vorderwand (4) und der Rückwand (5) aus einem Verschlusszustand (21) in einen geöffneten Zustand (22), zur Freigabe des Förderguts (39) nach unten,
- mit mindestens einem Schließmittel (24) zum reversiblen Verbinden und Öffnen der Verschlusseinrichtung (56),
**dadurch gekennzeichnet, dass** das Schließmittel (24) mit einem elektrischen Antrieb (10) betätigt wird und dass Mittel für die Steuerung des elektrischen Antriebs (10) vorgesehen sind.

2. Transporttasche (2) nach Anspruch 1, **dadurch gekennzeichnet,**
**dass** der elektrische Antrieb (10) ein elektrisch steuerbarer Magnet ist, vorzugsweise ein elektrischer Zugmagnet mit Federrückstellung und einem beweglichen stabförmigen Anker, und dass die Mittel für die Steuerung des elektrischen Antriebes (10) elektrische Kontakte (14) darstellen, angebracht an der Transporttasche (2) vorzugsweise an der Aufhängeeinrichtung (1) der Transporttasche (2) und
mit einer elektrischen Leitung (15) mit dem elektrischen Antrieb (10) verbunden sind zur Herstellung einer elektrischen Verbindung mit dem elektrischen Antrieb (10).

3. Transporttasche (2) nach einem der Ansprüche 1 bis 2 **dadurch gekennzeichnet, dass** die Verschlusseinrichtung (56) einen Vorder-Rahmen (13) und einen Hinter-Rahmen (11) darstellt, die schwenkbar, vorzugsweise mit Scharnieren (12) miteinander verbundenen sind und zueinander zusammenklappbar sind zum reversiblen Erzeugen des Verschlusszustands (21) oder des geöffnetes Zustands (22) der Transporttasche (2) und dass der Vorder-Rahmen (13) an der Vorderwand (4) angebracht ist und der Hinter-Rahmen (11) an der Rückwand (5) angebracht ist.

4. Transporttasche (2) nach einem der Ansprüche 1 bis 3 **dadurch gekennzeichnet,**
**dass** die Tragwand (54) zumindest teilweise aus einem flexiblen Stoff gebildet ist, vorzugsweise vollständig aus einem flexiblen Stoff besteht, besonders bevorzugt aus Textilen Stoff besteht, und
**dass** die Tragwand (54) Seitenwände (3) aufweist und
**dass** der Hinter-Rahmen (11) mit seitlichen Bereichen (29) an den Seitenwänden (3) angebracht ist zum Sichern des Förderguts (39) vor einem Herausfallen und
**dass** die Schließmittel (24) sich im unteren Bereich (57) der Verschlusseinrichtung (56) befinden.

5. Transporttasche nach einem der Ansprüche 1 bis 4 **dadurch gekennzeichnet,**
**dass** das Schließmittel (24) eine reversible Schließverriegelung (18) auf dem Hinter-Rahmen (11) der Verschlusseinrichtung (56) aufweist und
**dass** die reversible Schließverriegelung (18) ein linear bewegliches stabförmiges Riegelelement (8) aufweist, verbunden mit dem elektrischen Antrieb (10) und gelagert in den Linearführungen (9) und
**dass** das Schließen der reversiblen Schließverriegelung (18) durch die Rückstell-Feder des elektrischen Antriebs (10) betätigt wird und das Öffnen durch die Schaltung des elektrischen Antriebs (10).

6. Transporttasche (2) nach einem der Ansprüche 1 bis 5 **dadurch gekennzeichnet, dass** das Schließmittel (24) auf dem Vorder-Rahmen (13) der Verschlusseinrichtung (56) ein Halteelement (7) mit einer Öse (45) aufweist und
dass beim Zusammenklappen der Verschlusseinrichtung (56) das Halteelement (7) so positioniert ist, dass das Riegelelement (8) in die Öse (45) des Halteelements (7) reinfahren kann zum Schließen der Verschlusseinrichtung (56).

7. Transporttasche (2) nach Anspruch 2 **dadurch gekennzeichnet,**
**dass** die Verschlusseinrichtung (56) ein lineares Vorder-Schließelement (44) und ein lineares Rück-Schließelement (43) darstellt und
**dass** das lineare Vorder-Schließelement (44) am unteren Bereich der Vorderwand (4) befestigt ist und das lineare Rück-Schließelement (43 gegengerichtet im unteren Bereich der Rückwand (5) befestigt ist und
**dass** Zentriermittel (46;47;48) zum geführten zentrierten Verlagern der Schließelemente (43;44) relativ zueinander in den Verschlusszustand (21) vorgesehen sind und
**dass** das Schließmittel (24) eine reversible Schließverriegelung (18) auf dem linearen Rück-Schließelement (43) der Verschlusseinrichtung (56) aufweist und
**dass** die reversible Schließverriegelung (18) ein linear bewegliches stabförmiges Riegelelement (8) aufweist, verbunden mit dem elektrischen Antrieb (10) und gelagert in den Linearführungen (9) und
**dass** das Schließen der reversiblen Schließverriegelung (18) durch die Rückstell-Feder des elektrischen Antriebs (10) betätigt wird und das Öffnen durch die Schaltung des elektrischen Antriebs (10) und
**dass** das Schließmittel (24) auf dem linearen Vorder-Schließelement (44) der Verschlusseinrichtung (56) ein Halteelement (7) mit einer Öse (45) aufweist und
**dass** beim zum geführten zentrierten Verlagern der Schließelemente (43;44) relativ zueinander das Halteelement (7) so positioniert ist, dass das Riegelelement (8) mit in die Öse (45) des Halteelements (7) reinfahren kann zum Schließen der Verschlusseinrichtung (56).

8. Transporttasche (2) nach Anspruch 1 **dadurch gekennzeichnet,**
**dass** die Verschlusseinrichtung (56) ein lineares Vorder-Schließelement (44) und ein lineares Rück-Schließelement (43) darstellt und
**dass** das lineare Vorder-Schließelement (44) am unteren Bereich der Vorderwand (4) befestigt ist und das lineare Rück-Schließelement (43 gegengerichtet im unteren Bereich der Rückwand (5) befestigt ist, und
**dass** Zentriermittel (46;47;48) zum geführten zentrierten Verlagern der Schließelemente (43;44) relativ zueinander in den Verschlusszustand (21) vorgesehen sind, und
**dass** das Schließmittel (24) eine reversible Schließverriegelung (18) auf dem linearen Rück-Schließelement (43) der Verschlusseinrichtung (56) aufweist, und
**dass** die reversible Schließverriegelung (18) ein linear bewegliches stabförmiges Riegelelement (8) aufweist, verbunden mit dem elektrischen Antrieb (10) und gelagert in Linearführungen (9), und
**dass** das Schließen der reversiblen Schließverriegelung (18) durch eine Rückstell-Feder des elektrischen Antriebs (10) betätigt wird und das Öffnen durch die Schaltung des elektrischen Antriebs (10), und
**dass** das Schließmittel (24) auf dem linearen Vorder-Schließelement (44) der Verschlusseinrichtung (56) ein Halteelement (7) mit einer Öse (45) aufweist und
**dass** beim zum geführten zentrierten Verlagern der Schließelemente (43;44) relativ zueinander das Halteelement (7) so positioniert ist, dass das Riegelelement (8) mit in die Öse (45) des Halteelements (7) reinfahren kann zum Schließen der Verschlusseinrichtung (56).

9. Förderanlage mit Transporttaschen (2) nach einem der Ansprüche 1 bis 8
- mit einer Transportschiene (33),
- mit einer in der Transportschiene (33) in einer Förderrichtung (37) bewegbar gelagerten Förderelement (35) mit Mitnehmern (36),
- mit in der Transportschiene (33) unterhalb des Förderelements (35) gelagerten Transporttaschen (2),
- mit einer Entladestation (49) für die Transporttaschen (2) mit Mittel zum Öffnen der Verschlusseinrichtung (56) der Transporttasche (2) zum Ausladen des Förderguts (39) auf die Entladeplätze,
- mit einer Schließstation (51) für die Transporttaschen (2) mit Mittel zum Verriegeln der Verschlusseinrichtung (56) der Transporttasche (2),
- mit einer Beladestation (58) für die Transporttaschen (2) mit einem Beladetisch (40) zum manuellen, vorzugsweise zum automatischen mit einem Transportband, Transport des Förderguts (39) in die Transporttasche (2),
- mit Staustrecken (41) mit Vereinzelungen und Stoppvorrichtungen (61)

10. Entladestation (49) für die Transporttaschen (2) nach einem
der Ansprüche 1 bis 9 **dadurch gekennzeichnet,**
**dass** die Mittel zum Öffnen der Verschlusseinrichtung (56) mit elektrischem Strom versorgte elektrische Schaltkontakte (31) darstellen, welche vorzugsweise Kohlebürstenkontakte sind, und
**dass** die elektrischen Schaltkontakte (31) beim Schalten ein Kontakt mit den elektrischen Kontakten (14) erzeugen und eine elektrische Verbindung mit dem elektrischen Antrieb (10) herstellen zum Schalten des elektrischen Antriebs (10), sodass die Verschlusseinrichtung (56) sich öffnet und das Fördergut (39) ausgeladen wird.

11. Schließstation (51) für die Transporttaschen (2) nach einem der Ansprüche 1 bis 10 **dadurch gekennzeichnet,**
**dass** die Mittel zum Verriegeln der Verschlusseinrichtung (56) eine Hebe-Rampe (38) aufweisen zum Hochschwenken der Transporttasche (2) beim Fördern in Richtung (37) im Steigungsbereich der Hebe-Rampe (38), sodass durch die Schrägstellung der Transporttasche (2) ein zentriertes Zusammenführen der Verschlusseinrichtung (56) in den Verschlusszustand (21) entsteht und
**dass** gleichzeitig die elektrische Schaltkontakte (31) aktiviert werden zur Herstellung einer elektrischen Verbindung mit dem elektrischen Antrieb (10) mithilfe der elektrischen Kontakte (14) und Öffnen der reversiblen Schließverriegelung (18) der Schließmittel (24), sodass die Verschlusseinrichtung (56) zum Verriegeln bereitgestellt wird und nach dem Deaktivieren des Antriebs (10) der Verschlusszustand (21) mithilfe der Rückstell-Feder erzeugt wird.
